# EUROPEAN PATENT APPLICATION

(11) **EP 2 057 896 A1**
(43) Date of publication of application: **13.05.2009**
(21) Application number: 08253667.3
(22) Date of filing: 10.11.2008
(51) Int. Cl.: A01K 15/02

(54) **Launcher and chase toy**

(30) Priority: 10.11.2007 US 2472 P; 12.02.2008 US 69902; 14.07.2008 US 134863 P
(71) Applicant: Simon, David Frederick, Lakeland, FL 33810 (US)
(72) Inventor: Simon, David Frederick, Lakeland, FL 33810 (US)
(74) Representative: Price, Nigel John King

(57) **Abstract**

A combined launcher and chase toy includes a toroidal toy (62) and a launcher (60) having a resilient, lightweight shaft (76) with a handle (70) at one end and a head (80) at the other. The head has a toy-engaging surface which, in some embodiments, faces forward and catches the inner arcuate surface (66) of the toroidal toy (63) and boosts it forward when the shaft is swung overhand. Optionally, the head has a rear end configured to deflect the toy so that it isn't snagged as it departs. Alternative embodiments of the launcher partially encircle a segment of the toroidal toy with opposed toy-engaging surfaces. Optionally, these toy-engaging surfaces terminate distally in a loading portion which makes it easy to force the toy into engagement with the head. Optionally, the shaft is bent laterally to keep it from interfering with the toy. One embodiment of the launcher has spring-biased rams which engage a hardpoint on the toy.

## Description

This application claims the benefit of earlier-filed U.S. Provisional Patent Application No. 61/002,472, official filing date November 11, 2007, U.S. non-provisional application, official filing date February 12, 2008, and U.S. provisional application No. 61/134,863, official filing date July 14, 2008, the entire disclosures of each of which are incorporated herein by reference.

The present invention relates to a chase toy for a dog, especially such a chase toy with a launcher.

Dogs seem to enjoy chasing objects thrown or launched by their human companions, especially objects that bounce or shimmy as they travel.

The hand-held launcher lets fly a ring that arcs through the air before landing, rolling, skipping, hopping, and bouncing erratically while a dog chases it down. Alternatively, the toy can be launched directly to the ground, rolling downrange from that point. These unpredictable movements teach pet agility and maintain joint mobility. Unlike a ball that bounces a few times in a straight line and stops, the ring not only bounces but also turns while racing through grass or sand. Because the ring can be launched with an easy over-the-shoulder motion, even those with less strength or dexterity or who are wheel-chair bound can fling the ring in the park, beach, or just about any open location. The ring can also be launched in a horizontal orientation by swinging the launcher in a horizontal plane. The ring can then fly through the air in a horizontal orientation. A fast dog can catch the ring. Pets have been recommended as companions for older adults, who can easily employ this toy with a young or old pet.

In accordance with the objects of the invention, an exemplary embodiment of the chase toy and launcher in accordance with the present invention has a ring or toroidal toy having an inner arcuate surface defining an arc. Alternatively, the toy can have the form of a flattened toroidal disc. The launcher includes a shaft having a grippable first end and a second end. A head is fixed on the second end and has a toy-engaging surface which faces forward when the shaft is held with head upward. Usually, the launcher is swung overhead, overhand or side-arm. The toy-engaging surface conforms to the inner arcuate surface of the toroidal toy when the inner arcuate surface of the toy faces rearward relative to the toy-engaging surface and the arc defined by the inner arcuate surface is contained in a plane-of-swing substantially parallel to the shaft. To use this embodiment of the chase toy and launcher, a person simply rests the toy on the toy-engaging surface of the head while holding the launcher shaft upright. Unless disturbed or shaken out, the toy stays on the head until it is launched.

When the swinging motion of the launch is nearly complete, the toy is released as it rotates to a predetermined angle relative to the launcher head, at which point its position on the toy-engaging surface is unstable and the toy departs from the launcher. This event happens at a time and place close to the end of the swing, regardless of how aggressive the swing is. As a result, the trajectory of the ring does not depend on friction. This provides more control, more predictable launch trajectory, and more fun.

The inner arcuate surface of the toy may define a cross-sectional profile curve intersecting orthogonally with the arc on the toroidal toy; and the forward-facing surface of the head may then conform to the cross-sectional curve defined on the toroidal toy when the arc defined by the inner arcuate surface is contained in a plane-of-swing substantially parallel to the shaft. Thus, there is a good complementary fit between the launcher and the toy, because the launcher curvature matches both the arcuate curvature (related to overall size) of the toroidal toy and the cross-sectional shape of the toroidal toy, providing smooth engagement of the toy with the launcher.

In some embodiments, the shaft possesses greater stiffness in the direction perpendicular to the plane-of-swing than in the direction parallel thereto. This is accomplished by making the shaft oval or rectangular in cross-section, or by giving it the form of an I-beam, for example. Lateral stability is thus improved.

In an exemplary embodiment, the launcher is configured to deflect the toroidal toy sufficiently to prevent recapture thereof should the toroidal toy impinge on the launcher after departure from the launcher. For example, in some embodiments the head comprises a rear surface angled relative to the plane-of-swing. Alternatively, the head comprises a rearward-extending deflector configured to deflect the toroidal toy sufficiently to prevent recapture thereof should the toroidal toy impinge on the launcher after departure from the launcher.

Optionally, the toroidal toy and the forward-facing surface are shaped and dimensioned for mutual interference-fit and the toroidal toy is thereby sufficiently fixed in engagement with the forward-facing surface to keep the toroidal toy and the launcher together when the shaft is held with head oriented other than upward. This is not only a convenience, since a person may wish to carry the toy in the launcher for a while before launching it, but also stabilizes the toy in the launcher before and during launch.

Also optionally, at least one of the toroidal toy and the toy-engaging surface is deformable into the mutual interference-fit. For example, the toy-engaging surface may be formed on a rather stiff head and the toy may be formed of a soft, deformable yet bite-resistant and durable elastomer, thereby providing a good fit without the need for precise tolerances as to material and dimension.

Another exemplary embodiment of the launcher and chase toy in accordance with the present invention includes a toroidal toy having an inner arcuate surface defining an arc. The launcher has a shaft having a grippable first end and a second end; a head fixed on the second end, the head having a toy-engaging surface configured and oriented to engage a segment of the toroidal toy when the shaft is held with head upward; the toy-engaging surface partly encircling the segment of the toroidal toy when the inner arcuate surface faces rearward and the arc defined by the inner arcuate surface is contained in a plane-of-swing substantially parallel to the shaft.

The toroidal toy and the toy-engaging surface of this embodiment, too, can be shaped and dimensioned for mutual interference-fit. The toroidal toy can be sufficiently fixed in engagement with the forward-facing surface to keep the toroidal toy and the launcher together when the shaft is held with head oriented other than upward.

Optionally, at least one of the toroidal toy and the forward-facing surface is deformable into the mutual interference-fit, accomplishing the interference-fit without overly precise tolerances as to dimension and material.

In one exemplary embodiment, the shaft possesses greater stiffness in the direction perpendicular to the plane-of-swing than in the direction parallel thereto, providing lateral stability, which improves aim.

Optionally, the head comprises a loading portion configured to guide the toroidal toy into engagement with the toy-engaging surface when the launcher is urged into contact with the toroidal toy. This can be done with or without a high degree of deformability being involved in the interference-fit. The toy-engaging surface may be opposingly bifurcated. The loading portion may be opposingly bifurcated and dished, extending from the head proximate the toy-engaging surface.

In one exemplary embodiment, the shaft has at least one curved portion between the grippable end and the second end. Thus, the bent shaft is out-of-plane with the arc when the toy-engaging surface conforms to the inner arcurate surface. This keeps the shaft from interfering with the toy.

In some exemplary embodiments, the shaft tapers distally, providing late in launch a rapid, tighteningly arcuate whip-like motion of the head, the better to impart topspin to the toy.

Also in accordance with the present invention, a launcher and chase toy, have a toroidal toy having opposing side surfaces and an inner arcuate surface; an arc defined by the inner arcuate surface; a pair of opposed pits, one formed in each of the side surfaces; and a shank embedded in the toroidal toy between the pits. This arrangement provides a hard-point on the toroidal toy for engagement with the launcher. The launcher has shaft having a grippable first end and a second end; a head fixed on the second end, the head having a toy-engaging surface configured and oriented to engage a segment of the toroidal toy when the shaft is held with head upward. The toy-engaging surface partly encircles the segment of the toroidal toy when the inner arcuate surface faces rearward and the arc defined by the inner arcuate surface is contained in a plane-of-swing substantially parallel to the shaft. The toy-engaging surface is bifurcated and contains a pair of opposing rams which are biased toward one another and configured to engage the shank via the pits when the toy-engaging surface partly encircles the segment of the toroidal toy. The rams hold the toroidal toy in engagement with the launcher against a force of predetermined magnitude. The toy escapes the rams and the launcher when this magnitude is exceeded.

For a further understanding of the objects and advantages of the present invention, reference should be had to the following detailed description, taken in conjunction with the accompanying drawing, in which like parts are given like reference numbers and wherein:

FIG. 1 is a perspective view of an exemplary embodiment of the launcher and chase toy in accordance with the present invention, showing the chase toy seated in the launcher;

FIG. 2 is a rear elevational view thereof;

FIG. 3 is a top plan view thereof;

FIG. 4 is a right side elevational view thereof;

FIG. 5 is a perspective view thereof;

FIG. 6 is a left side elevational view thereof;

FIG. 7 is a front elevational view thereof;

FIG. 8 is a front elevational view thereof showing the launcher alone;

FIG. 9 is a perspective view thereof showing the launcher alone;

FIG. 10 is a right side elevational view thereof showing the launcher alone;

FIG. 11 is a rear elevational view thereof showing the launcher alone;

FIG. 12 is a top plan view thereof showing the launcher alone;

FIG. 13 is a bottom plan view thereof showing the launcher alone;

FIG. 14 is a perspective view thereof showing the launcher alone;

FIG. 15 is a partial perspective view thereof showing a portion of the launcher alone;

FIG. 16 is a perspective view of a first alternative embodiment of the launcher and chase toy in accordance with the present invention, showing the chase toy seated in the launcher;

FIG. 17 is a front elevational view thereof;

FIG. 18 is a top plan view thereof;

FIG. 19 is a left side elevational view thereof;

FIG. 20 is a right side elevational view thereof;

FIG. 21 is a bottom plan view thereof;

FIG. 22 is a rear elevational view thereof;

FIG. 23 is a perspective view thereof showing the chase toy and launcher separated;

FIG. 24 is a perspective view of the embodiment of Fig. 24 showing the launcher alone;

FIG. 25 is a front elevational view thereof showing the launcher alone;

FIG. 26 is a top plan view thereof showing the launcher alone;

FIG. 27 is a left side elevational view thereof showing the launcher alone;

FIG. 28 is a rear elevational view thereof showing the launcher alone;

FIG. 29 is a bottom plan view thereof showing the launcher alone;

FIG. 30 is a front elevational view thereof showing the launcher alone;

FIG. 31 is a perspective view of a second alternative embodiment of the launcher and chase toy in accordance with the present invention, showing the chase toy and launcher separated;

FIG. 32 is a side elevational view of the embodiment of Fig. 31, showing the chase toy seated in the launcher;

FIG. 33 is a top plan view of the embodiment of Fig. 32, showing the chase toy partly obscuring the launcher;

FIG. 34 is a front elevational view of the embodiment of Fig. 32;

FIG. 35 is a perspective view thereof;

FIG. 36 is a side elevational view thereof showing the launcher alone;

FIG. 37 is a top plan view thereof showing the launcher alone;

FIG. 38 is a perspective view thereof showing the launcher alone;

FIG. 39 is a front elevational view thereof showing the launcher alone;.

FIG. 40 is a front elevational view thereof showing the launcher approximated to the chase toy before engagement; and

FIG. 41 is a side sectional view of a third alternative embodiment of the launcher and chase toy in accordance with the present invention.

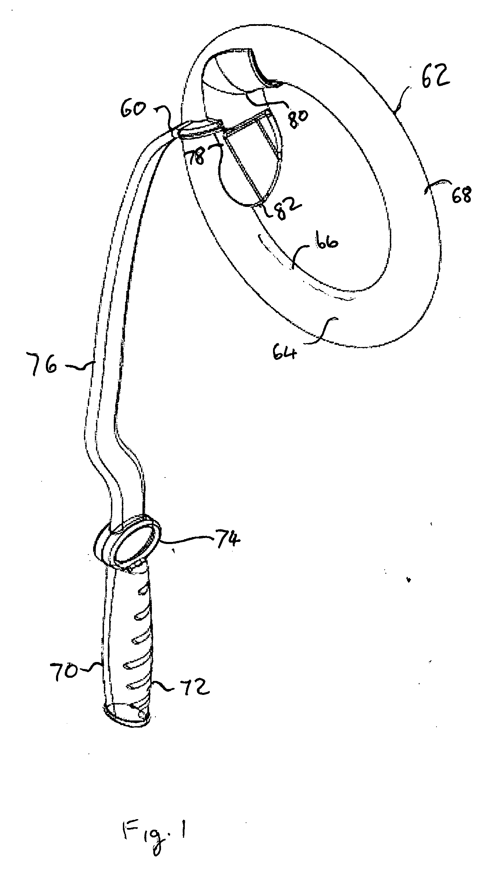

The invention will now be described with reference to FIG. 1, which illustrates a perspective view of an exemplary embodiment of the launcher 60 and chase toy 62 in accordance with the present invention, showing the chase toy 62 seated in the launcher 60.

The chase toy 62 has spaced-apart side surfaces 64 and spaced-apart inner arcuate surface 66 and outer arcuate surface 68, all of which are generally accommodated by the launcher 60 as discussed elsewhere in greater detail with reference to the launcher 60 and with reference to how the launcher 60 and the chase toy 62 cooperate. The chase toy 62 is generally toroidal in shape and generally rounded or ovoidal in cross-section; generally compressible and optionally hollow; lightweight and preferably buoyant; stiff and resilient enough to bounce and roll efficiently and without rapidly losing speed when bouncing over terrain; and generally made of an elastomeric material suitable for an item intended to endure several months of being chewed by a dog. Optionally, the chase toy 62 has a flattened ovoidal cross section for reducing aerodynamic resistance during flight, i.e., the inner arcurate surface 66 and outer arcuate surface 68 are spaced farther apart than are the side surfaces 64.

With continued reference to Fig. 1, the launcher 60 has a rigid handle 70, a grip 72 which is either one-handed as shown in the figures or two-handed (longer, as illustrated described in prior co-pending U.S. Patent Application No. 12/069,902, the entire disclosure of which is incorporated herein by reference) and which may include soft rubber or the like for comfort, a display 74 where a trademark or ornamental feature may be located, a resilient and substantially elastically deformable shaft 76, and a resilient head 78 with a deflector portion 82 and with an accelerator portion 80 shown cradling the chase toy 62.

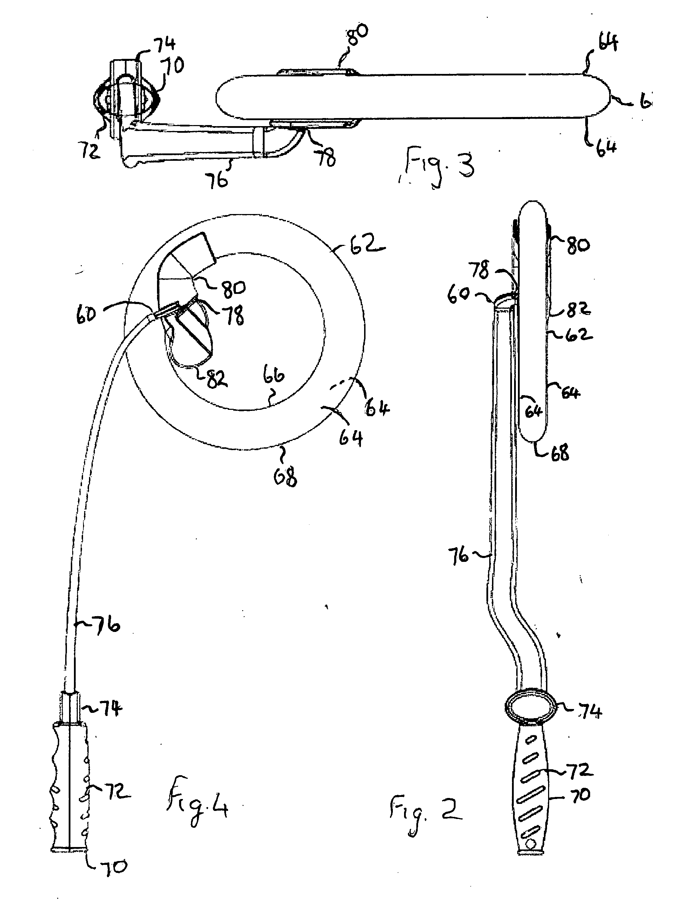

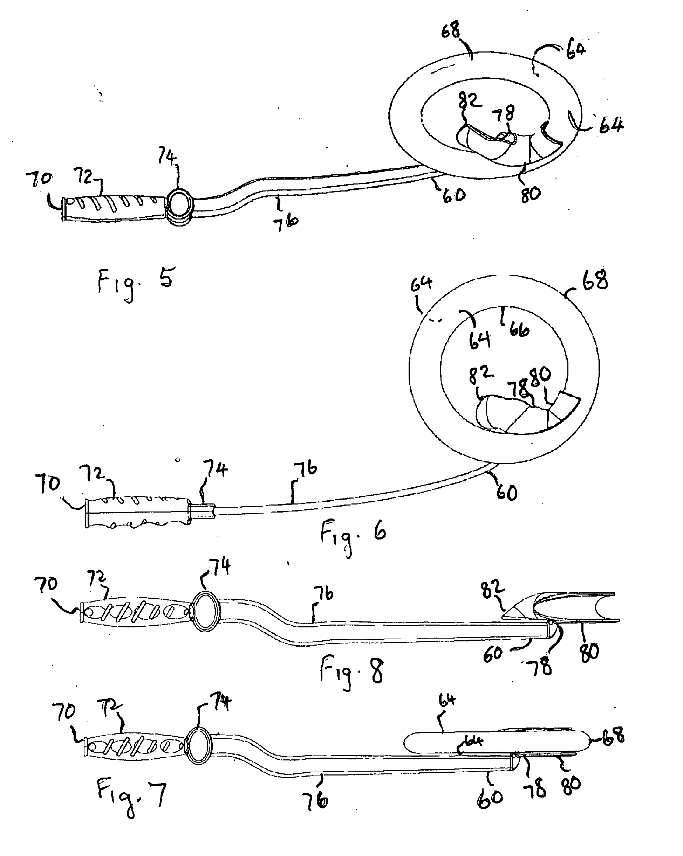

With reference to FIG. 2, a rear elevational view; FIG. 3, a top plan view; FIG. 4, a right side elevational view; FIG. 5, a perspective view; FIG. 6, a left side elevational view; and FIG. 7, a front elevational view, the launcher, generally at 60, is shown with handle 70, grip 72, display 74, shaft 76, head 78 having accelerator portion 80 and deflector portion 82. The chase toy, generally at 62, is shown with side surfaces 64, inner arcuate surface 66, and outer arcuate surface 68.

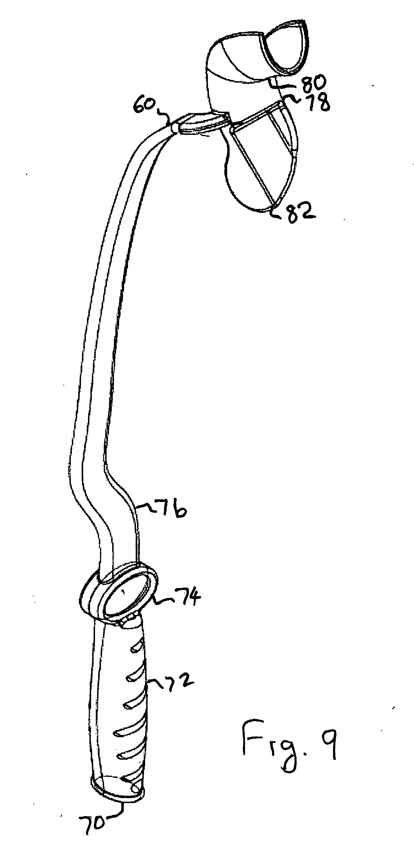

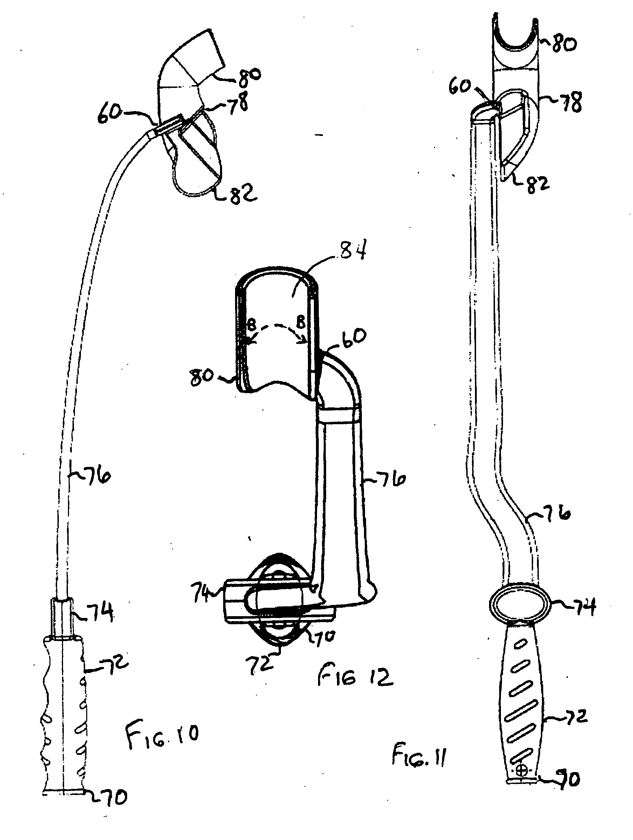

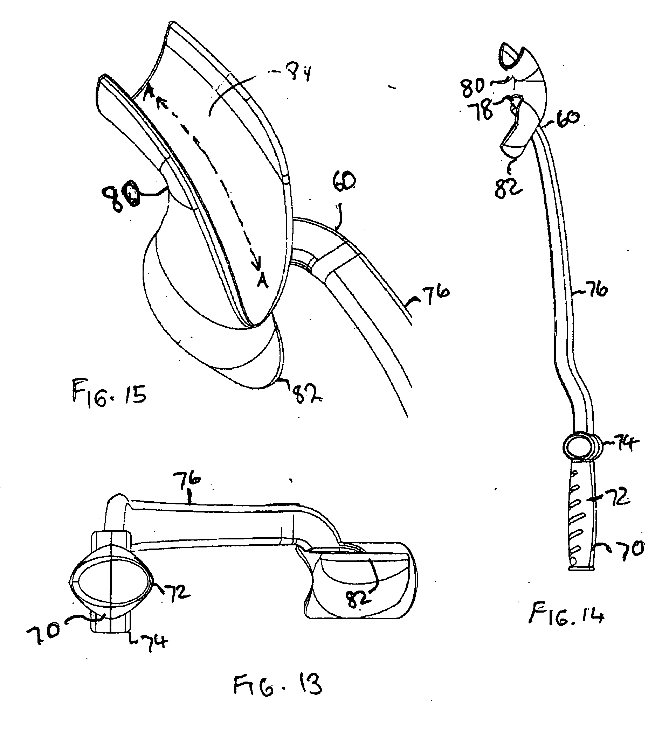

With reference to FIG. 8, a front elevational view of the exemplary embodiment showing the launcher 60 alone; FIG. 9, a perspective view thereof; FIG. 10, a right side elevational view; FIG. 11, a rear elevational view; FIG. 12, a top plan view; FIG. 13, a bottom plan view; FIG. 14, a perspective view, and FIG. 15, a partial perspective view thereof showing especially the head 78, the launcher 60 is shown with handle 70, grip 72, display 74, shaft 76, and the head 78 having accelerator portion 80 and deflector portion 82.

With particular reference to FIG. 12 and FIG. 15, the accelerator portion 80 has a thrusting surface 84. The thrusting surface 84, in its longitudinal (front-to-rear) curvature, shown as a dashed double-ended arrow A-A in FIG. 15, generally is convex and approximates the curvature of the inner arcuate surface 66 of the chase toy 62 (see, e.g., FIG. 1 and FIG. 4). In its transverse (side-to-side) curvature, shown as a dashed double-ended arrow B-B in FIG. 12, the thrusting surface 84 generally is concave and approximates the curvature and mutual separation of the side surfaces 64 of the chase toy 62 (see, e.g., FIG. 3). As a result, the chase toy 62 tends to rest in the accelerator portion 80 when the launcher 60 is held with the shaft 76 extending upward.

With reference to FIG. 11, FIG. 12 and FIG. 13, it is seen that in this exemplary embodiment of the launcher 60, the shaft 76 deviates laterally between the handle 70 and the head 78. Consequently, the handle 70 does not intrude immediately forward or downward of the accelerator portion 80, thereby avoiding interference with the chase toy 62 while nevertheless aligning the accelerator portion 80 with the handle 70. This lets the chase toy 62 hang undisturbed while resting in engagement with the accelerator portion 80 and also reduces the likelihood that the shaft 76 would perturb the motion of the chase toy 62 during launch. It also keeps the chase toy 62 aligned with the handle 70 for comfort and stability during launch. Alternatively, the shaft 76 may be straight and the head 78 offset from the shaft 76 to avoid interference between the shaft 76 and the toy 62.

With reference to FIG. 10 and FIG. 11, it is seen that in this exemplary embodiment, the shaft 76 is wider (side-to-side) than it is thick (front-to-rear). Being thus relatively wide, the shaft 76 has relatively high lateral stiffness and therefore is relatively resistant to lateral bending, which, in the interest of better aiming, improves lateral control of the launcher 60 as the chase toy 62 is launched. Being thus relatively thin, the shaft 76 has somewhat lower front-to-rear stiffness and therefore elastically deforms under the load that is applied as the launcher 60 is sharply thrust and rotated overhand to accelerate and launch the chase toy 62. In the interest of increased range, the elastically deformable shaft 76 absorbs potential energy early during launch and releases it later during launch, imparting increased speed to the chase toy 62. It is also seen that the shaft 76 is tapered, which helps impart a sudden, curved whipping motion to the head 78 in the late stage of the launch and thus helps impart linear and angular velocity and momentum to the chase toy 62.

With reference to FIG. 10, it is seen that in this exemplary embodiment the shaft 76 is somewhat recurved. Consequently, from the very beginning of launch, even before the shaft 76 experiences any elastic deformation due to applied load during acceleration, the head 78 lags the handle 70. This stabilizes the grip 72 relative to the hand of the person swinging the launcher 60. This also stabilizes the engagement of the chase toy 62 with the launcher 60.

Very late during launch, as the person launching the chase toy 62 finishes swinging the launcher overhand, 60, the head 78 decelerates along a downward-curved path before eventually coming to rest. As the head 78 decelerates along the curved path, the chase toy 62, while engaged with the thrusting surface 84 of the accelerator portion 80, begins to overshoot the head 78 and experiences torque imparting angular velocity and angular momentum to the chase toy 62. Thus, the chase toy 62 is not only launched, but set spinning, wheel-like, and is thereby stabilized in edge-wise flight. Additionally, the spin imparted is topspin; therefore, when the chase toy encounters terrain it will do so with angular momentum tending to urge it forward, prolonging its travel downrange.

With reference to FIG. 1, FIG. 4, FIG. 11 and FIG. 13, the deflector portion 82 extends generally downward and rearward behind and beneath the accelerator portion 80. At the final stage of launch, as the chase toy 62 overshoots the downward-deviating and decelerating head 78 and departs from the head 78, a side surface 64 and the inner arcuate surface 66 of the chase toy 62 may impinge upon the head 78. As seen from the direction of impingement in the rear elevational view of FIG. 11, the deflector portion 82 ensures that any such impingement will be oblique and momentary, diverting the chase toy 62 and preventing the launcher 60 from snagging and recapturing the chase toy 62.

In an exemplary embodiment of the launcher 60 and chase toy 62 in accordance with the present invention, the chase toy 62 and the accelerator portion 80 cooperate by way of interference fit to enable the launcher 60 to grip the chase toy 62 after the chase toy is approximated to the launcher and until the chase toy 62 is launched. The strength of interference fit may be predetermined to provide sufficient grip under given circumstances. For example, a relatively weak fit holds the chase toy 62 when the chase toy 62 and the launcher 60 are dry. Such a hold might not even be desired, given that the chase toy 62 rests stably in engagement with the launcher 60 when the launcher 60 is held upright. Nevertheless, it might be preferred for stability in other orientations. A stronger fit is required in the presence of dog saliva, which tends to be slippery. A still stronger fit is required if it is desired that the chase toy 62 be retained firmly during launch as described in prior co-pending U.S. Patent Application No. 12/069,902, the entire disclosure of which is incorporated herein by reference. Characteristics to be manipulated to influence the strength of grip may be classified according to whether they pertain to the chase toy 62 or the launcher 60 and according to whether they are surface properties or bulk characteristics. The chase toy 62 may be made more or less deformable (by virtue of material, such as by choice of elastomer, or by choice of shape, such as degree of hollowness or porosity) and may be finished with rougher or smoother side surfaces 64. The side surfaces 64 may be spaced farther apart, in consideration of the dimensions of the launcher 60, to strengthen the fit. The accelerator portion 80 may be made more or less deformable though choices in the material and shape of the accelerator portion 80, and rougher or smoother by virtue of material and surface treatment.

Optionally, although not illustrated, the shaft 76 and the handle 70 may be constructed and joined to enable the shaft 76 to telescope partly within the handle 70 or to enable a one segment multi-segmented shaft to telescope within another. Also optionally, the launcher 60 may be equipped with a locking hinge at one or more portions of the handle 70 or shaft 76 to provide for compact storage. Yet another option is to provide the launcher in several short segments that can be separated for compact storage.

The chase toy 62 is molded of an elastomer. However, alternative chase toy fabrications include the full range of materials safe and durable enough and generally suited for amusing a dog and its human companion. For larger, longer-range versions of the launcher and chase toy in accordance with the present invention, the chase toy may be relatively large, i.e., in the range of 8-12 inches in overall diameter. For smaller versions better adapted to close quarters, a smaller chase toy in the range of 4-6 inches may be preferred. Preferably, the chase toy is buoyant so that it is not lost in water.

In one embodiment, the launcher 60 is a unitary molding of polypropylene, having a single-hand grip 72 perhaps 6 inches in length or a two-hand grip 72 perhaps 10 inches in length (not illustrated in the figures) and a shaft about 13 inches in length, about 0.5 inch thick and about 1 inch wide proximate the handle 70, and tapering somewhat distally (toward the head 78). Alternatively, the shaft 76 and head 78 may be molded separately and sonic-welded together. Other materials, such as composites, metals and hardwood, could be used with appropriate fabrication methods. The grip 72 may be formed on or adhered to the handle 70 in ways customary for toys, tools and sporting goods, or it may be omitted.

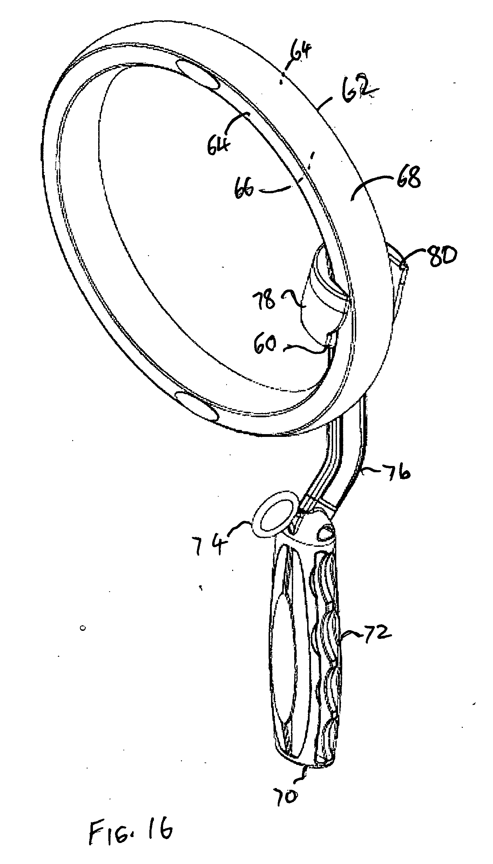

FIG. 16 is a perspective view of a first alternative embodiment of the launcher 60 and chase toy 62 in accordance with the present invention, showing the chase toy 62 seated in the launcher 60. This embodiment is suggested for use in a relatively restricted space such as a patio or a fenced yard.

The chase toy 62 has spaced-apart side surfaces 64 and spaced-apart inner arcuate surface 66 and outer arcuate surface 68, all of which are generally accommodated by the launcher 60 as discussed elsewhere in greater detail with reference to the launcher 60 and with reference to how the launcher 60 and the chase toy 62 cooperate. The chase toy 62 is generally toroidal in shape and generally rounded or ovoidal in cross-section; generally compressible and optionally hollow; lightweight and preferably buoyant; stiff and resilient enough to bounce and roll efficiently and without rapidly losing speed when bouncing over terrain; and generally made of an elastomeric material suitable for an item intended to endure several months of being chewed by a dog. Optionally, the chase toy 62 has a flattened ovoidal cross section for reducing aerodynamic resistance during flight, i.e., the inner arcurate surface 66 and outer arcuate surface 68 are spaced farther apart than are the side surfaces 64. In this exemplary embodiment of the chase toy 62, this spacing relationship is reversed, giving the chase toy 62 a low-profile-tire-shaped appearance which some may find preferable for improved rolling on a patio or in a yard.

With continued reference to Fig. 16, the launcher 60 has a rigid handle 70, a grip 72 which may include soft rubber or the like for comfort, a display 74 where a trademark or ornamental feature may be located, a resilient and substantially elastically deformable shaft 76, and a resilient head 78 with an accelerator portion 80 shown engaged with the chase toy 62.

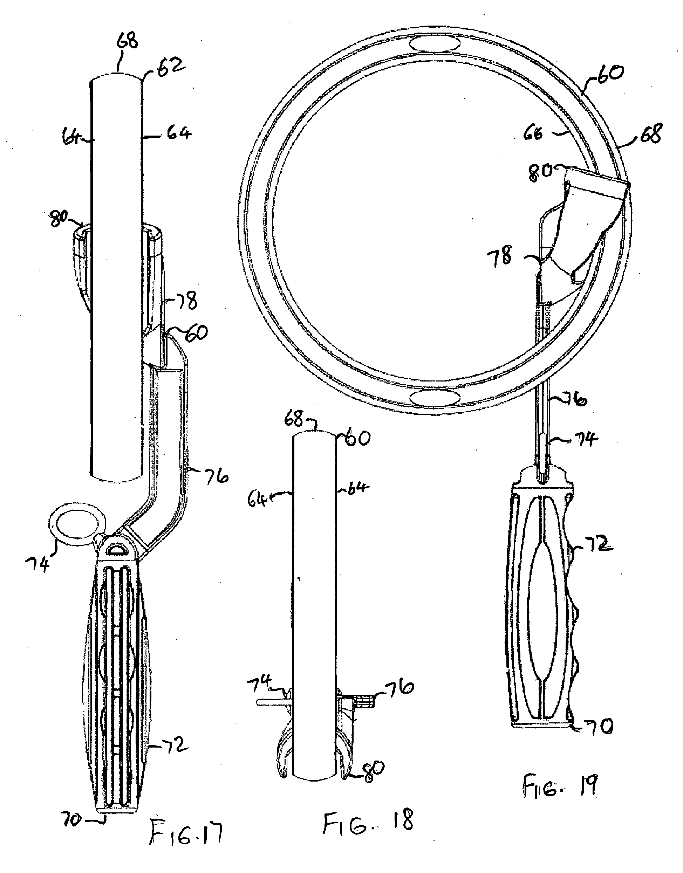

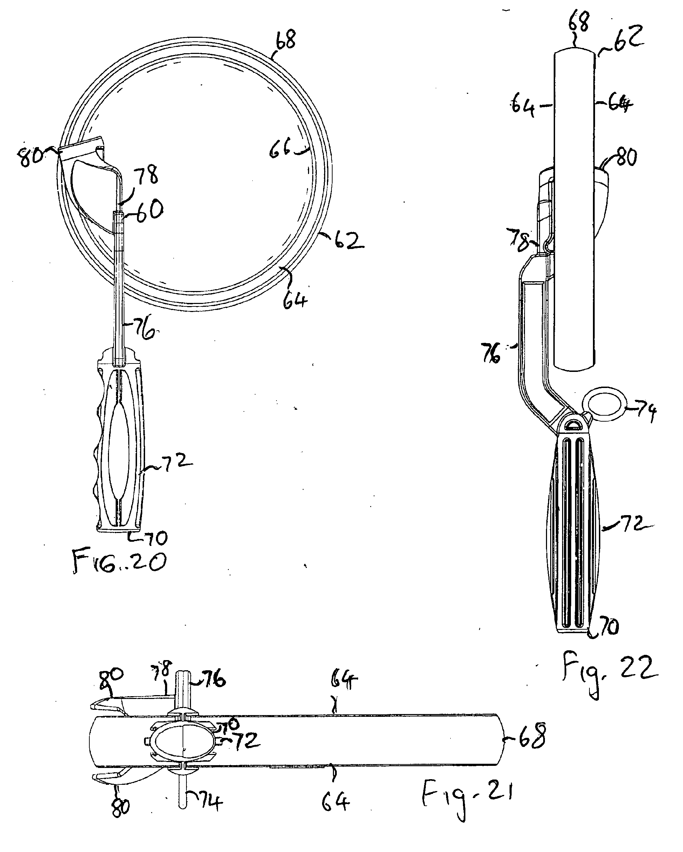

With reference to FIG. 17, a front elevational view; FIG. 18, a top plan view; FIG. 19, is a left side elevational view; FIG. 20, a right side elevational view; FIG. 21, a bottom plan view; and FIG. 22, a rear elevational view, the launcher, generally at 60, is shown with handle 70, grip 72, display 74, shaft 76, head 78 having accelerator portion 80. The chase toy, generally at 62, is shown with side surfaces 64, inner arcuate surface 66, and outer arcuate surface 68.

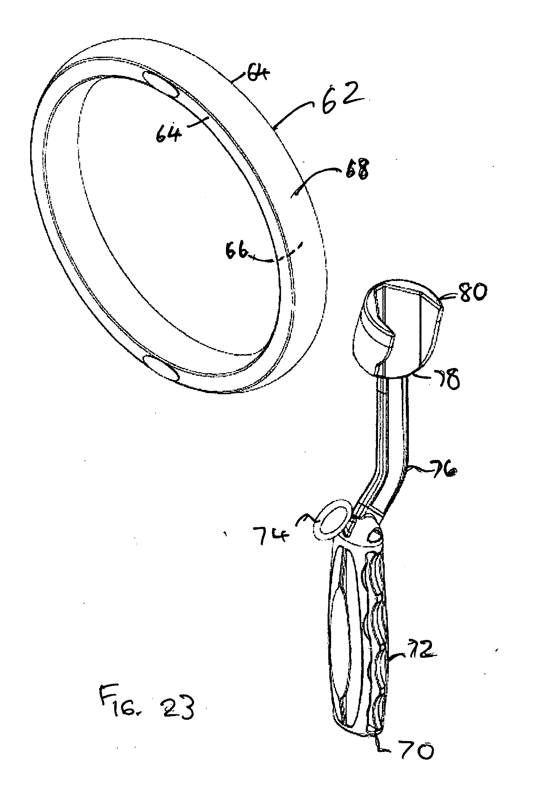

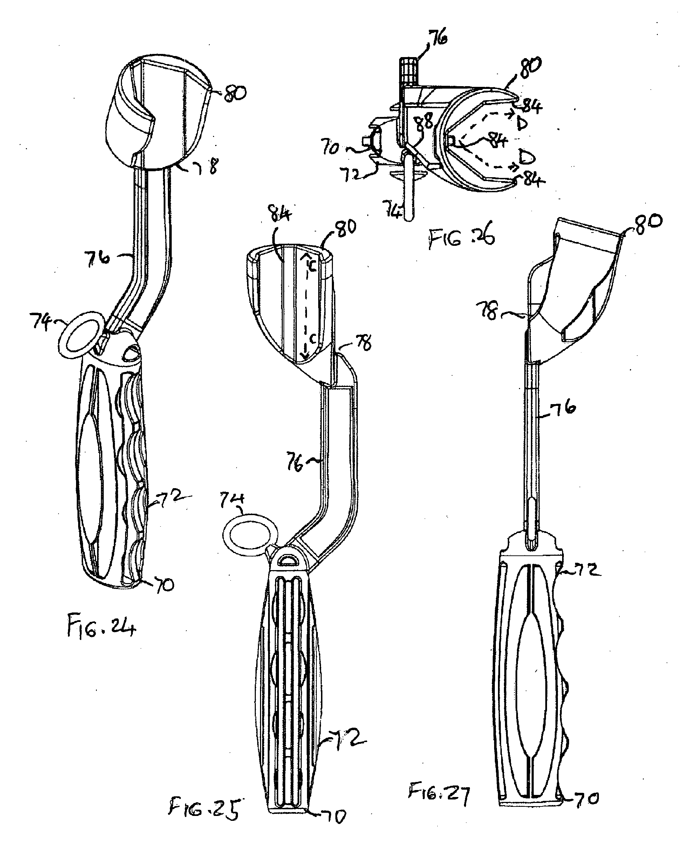

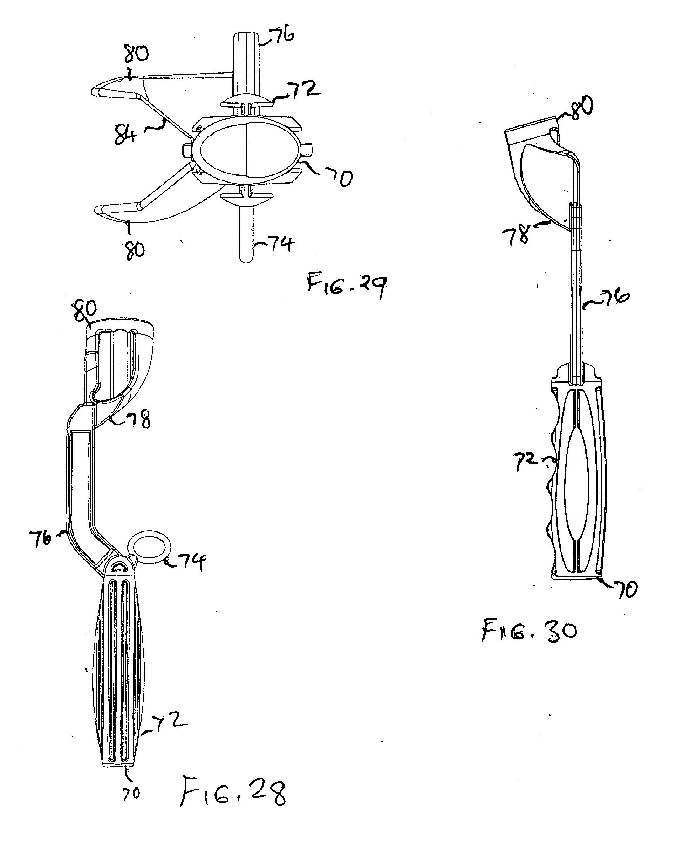

With reference to FIG. 23, a front elevational view of the exemplary embodiment showing the launcher 60 alone; FIG. 24, a perspective view thereof; FIG. 25, a front elevational view; FIG. 26, a top plan view; FIG. 27, a left side elevational view; FIG. 28, a rear elevational view; FIG. 29, a bottom plan view, and FIG. 30, a front elevational view thereof, the launcher 60 is shown with handle 70, grip 72, display 74, shaft 76, and the head 78 having accelerator portion 80.

With particular reference to FIG. 25 and FIG. 26, the accelerator portion 80 has a thrusting surface 84. The thrusting surface 84 is illustrated as having little or no longitudinal (front-to-rear) curvature, as a dashed double-ended arrow C-C in FIG. 25, and, being rather short, serves generally to engage inner arcuate surface 66 of the chase toy 62 (see, e.g., FIG. 16 and FIG. 19). In its transverse (side-to-side) aspect, shown as a dashed double-ended arrow D-D in FIG. 26, the thrusting surface 84 generally is concave and, while not necessarily approximating the curvature of the side surfaces 64 of the chase toy 62 (see, e.g., FIG. 3), roughly approximates their mutual separation. As a result, the chase toy 62 tends to rest in the accelerator portion 80 when the launcher 60 is held with the shaft 76 extending in any position near horizontal with the thrusting surface 84 facing upward. With an interference-fitting or encircling relationship between the chase toy 62 and the launcher 60, the chase toy 62 will remain engaged in the launcher 60 over a greater range of orientations.

With reference to FIG. 16, FIG. 26 and FIG. 29, for example, it is seen that in this exemplary embodiment of the launcher 60, the shaft 76 deviates laterally between the handle 70 and the head 78. Consequently, the handle 70 does not intrude immediately forward or downward of the accelerator portion 80, thereby avoiding interference with the chase toy 62 while nevertheless aligning the accelerator portion 80 with the handle 70. This lets the chase toy 62 hang undisturbed while resting in engagement with the accelerator portion 80 and also reduces the likelihood that the shaft 76 would perturb the motion of the chase toy 62 during launch. It also keeps the chase toy 62 aligned with the handle 70 for comfort and stability during launch. Alternatively, the shaft 76 may be straight and the head 78 offset from the shaft 76 to avoid interference between the shaft 76 and the toy 62.

With reference to FIG. 25 and FIG. 27, it is seen that in this exemplary embodiment, the shaft 76 is wider (side-to-side) than it is thick (front-to-rear). Being thus relatively wide, the shaft 76 has relatively high lateral stiffness and therefore is relatively resistant to lateral bending, which, in the interest of better aiming, improves lateral control of the launcher 60 as the chase toy 62 is launched. Being thus relatively thin, the shaft 76 has somewhat lower front-to-rear stiffness and therefore elastically deforms under the load that is applied as the launcher 60 is sharply thrust and rotated overhand to accelerate and launch the chase toy 62. In the interest of increased range (or, in the case of a small yard, reduced effort), the elastically deformable shaft 76 absorbs potential energy early during launch and releases it later during launch, imparting increased speed to the chase toy 62. It is also seen that the shaft 76 is tapered, which helps impart a sudden, curved whipping motion to the head 78 in the late stage of the launch and thus helps impart linear and angular velocity and momentum to the chase toy 62.

Very late during launch, as the person launching the chase toy 62 finishes swinging the launcher 60 overhand (a more apt verb would be "flicking," this embodiment being short-shafted), the head 78 decelerates along a downward-curved path before eventually coming to rest. As the head 78 decelerates along the curved path, the chase toy 62, while engaged with the thrusting surface 84 of the accelerator portion 80, begins to overshoot the head 78 and experiences torque imparting angular velocity and angular momentum to the chase toy 62. Thus, the chase toy 62 is not only launched, but set spinning, wheel-like, and is thereby stabilized in edge-wise flight. Additionally, the spin imparted is topspin; therefore, when the chase toy encounters terrain it will do so with angular momentum tending to urge it forward, prolonging its travel downrange.

With reference to FIG. 26, the accelerator portion 80 has an angled rear surface 88. At the final stage of launch, as the chase toy 62 overshoots the downward-deviating and decelerating head 78 and departs from the head 78, a side surface 64 and the inner arcuate surface 66 of the chase toy 62 may impinge upon the head 78. The angled rear surface 88 ensures that any such impingement will be oblique and momentary, diverting the chase toy 62 and preventing the launcher 60 from snagging and recapturing the chase toy 62.

In an exemplary embodiment of the launcher 60 and chase toy 62 in accordance with the present invention, the chase toy 62 and the accelerator portion 80 cooperate by way of interference fit to enable the launcher 60 to grip the chase toy 62 after the chase toy is approximated to the launcher and until the chase toy 62 is launched. The strength of interference fit may be predetermined to provide sufficient grip under given circumstances. For example, a gentle clamping force, encirclement or interference fitting relationship between the chase toy 62 and the launcher 60 holds the chase toy 62 when the chase toy 62 and the launcher 60 are dry. Such a hold might not even be desired, given that the chase toy 62 rests stably in engagement with the launcher 60 when the launcher 60 is held with the thrusting surface 84 facing generally upward. Nevertheless, an interference fit or the like might be preferred for stability in other orientations. A stronger fit is required in the presence of dog saliva, which tends to be slippery. A still stronger fit is required if it is desired that the chase toy 62 be retained firmly during launch as described in prior co-pending U.S. Patent Application No. 12/069,902, the entire disclosure of which is incorporated herein by reference. Characteristics to be manipulated to influence the strength of grip may be classified according to whether they pertain to the chase toy 62 or the launcher 60 and according to whether they are surface properties or bulk characteristics. The chase toy 62 may be made more or less deformable (by virtue of material, such as by choice of elastomer, or by choice of shape, such as degree of hollowness or porosity) and may be finished with rougher or smoother side surfaces 64. The side surfaces 64 may be spaced farther apart, in consideration of the dimensions of the launcher 60, to strengthen the fit. The accelerator portion 80 may be made more or less deformable though choices in the material and shape of the accelerator portion 80, and rougher or smoother by virtue of material and surface treatment.

Optionally, although not illustrated, the shaft 76 and the handle 70 may be constructed and joined to enable the shaft 76 to telescope partly within the handle 70 or to enable a one segment multi-segmented shaft to telescope within another. Also optionally, the launcher 60 may be equipped with a locking hinge at one or more portions of the handle 70 or shaft 76 to provide for compact storage. Yet another option is to provide the launcher in several short segments that can be separated for compact storage.

The chase toy 62 is molded of an elastomer. However, alternative chase toy fabrications include the full range of materials safe and durable enough and generally suited for amusing a dog and its human companion.

The launcher 60 is preferable a unitary molding of polypropylene, having a single-hand grip 72 perhaps 6 inches in length or a two-hand grip 72 perhaps 10 inches in length (not illustrated in the figures) and a shaft about 13 inches in length, about 0.5 inch thick and about 1 inch wide proximate the handle 70, and tapering somewhat distally (toward the head 78). Alternatively, the shaft 76 and head 78 may be molded separately and sonic-welded together. Other materials, such as composites, metals and hardwood, could be used with appropriate fabrication methods. The grip 72 may be formed on or adhered to to the handle 70 in ways customary for toys, tools and sporting goods, or it may be omitted.

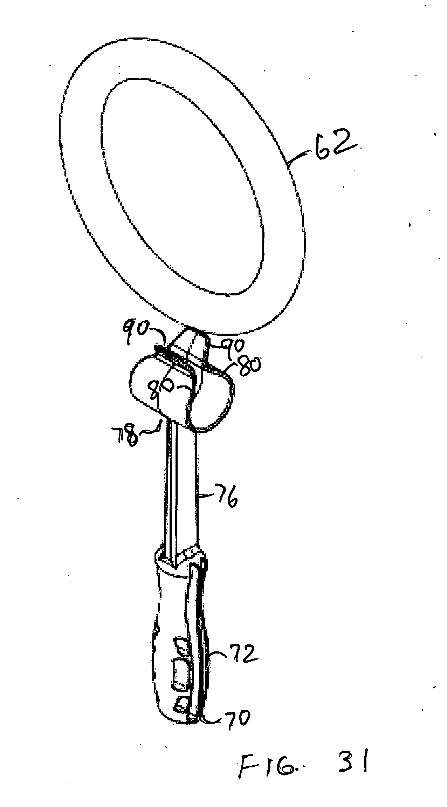

FIG. 31 is a perspective view of a second alternative embodiment of the launcher 60 and chase toy 62 in accordance with the present invention, showing the chase toy 62 and launcher 60 separated. This embodiment is suggested for mass market sale, utilizing minimal material and occupying minimal shelf space. Being small, it is also appropriate for use in a relatively restricted space such as a patio or a fenced yard.

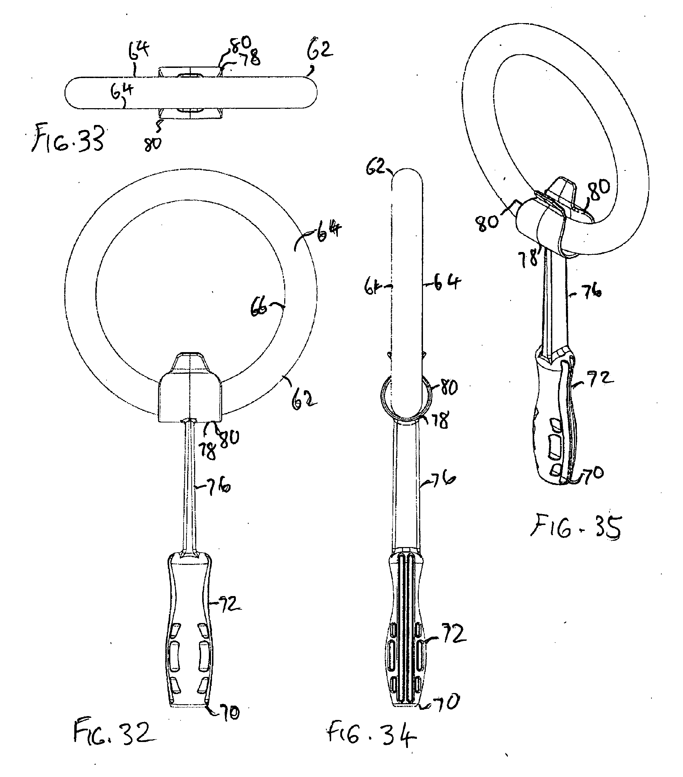

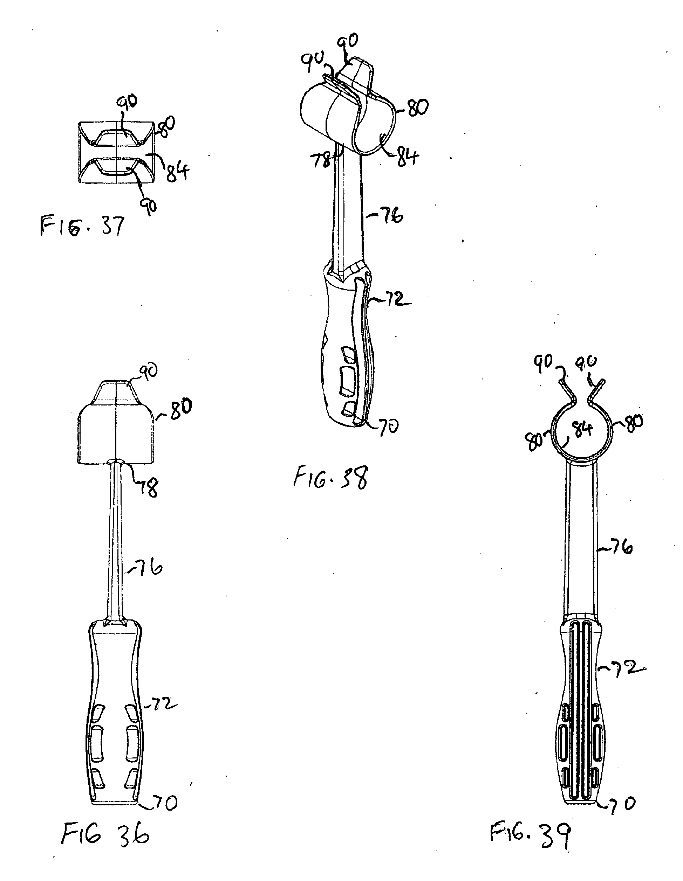

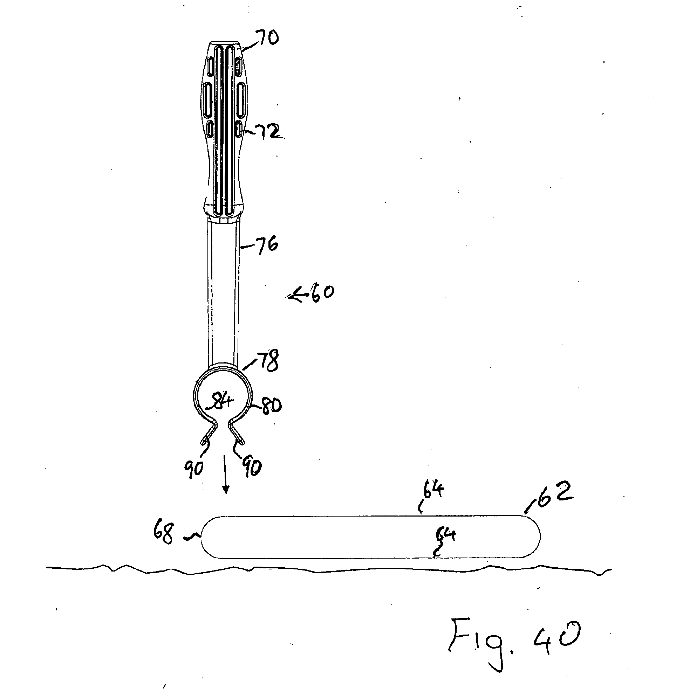

With continued reference to FIG. 31 and also with reference to FIG. 32, a side elevational view of the embodiment of Fig. 31 showing the chase toy seated in the launcher; FIG. 33, a top plan view of the embodiment of Fig. 32, showing the chase toy partly obscuring the launcher; FIG. 34, a front elevational view thereof; FIG. 35, a perspective view thereof; FIG. 36, a side elevational view thereof showing the launcher alone; FIG. 37, a top plan view thereof; FIG. 38, a perspective view thereof; FIG. 39, a front elevational view thereof; and FIG. 40, a front elevational view thereof showing the launcher approximated to the chase toy before engagement, the chase toy 62 has spaced-apart side surfaces 64 and spaced-apart inner arcuate surface 66 and outer arcuate surface 68, all of which are generally accommodated by the launcher 60 as discussed elsewhere in greater detail with reference to the launcher 60 and with reference to how the launcher 60 and the chase toy 62 cooperate. The chase toy 62 is generally toroidal in shape and generally rounded or ovoidal in cross-section; generally compressible and optionally hollow; lightweight and preferably buoyant; stiff and resilient enough to bounce and roll efficiently and without rapidly losing speed when bouncing over terrain; and generally made of an elastomeric material suitable for an item intended to endure several months of being chewed by a dog. Optionally, the chase toy 62 has a flattened ovoidal cross section for reducing aerodynamic resistance during flight, i.e., the inner arcurate surface 66 and outer arcuate surface 68 are spaced farther apart than are the side surfaces 64.

The launcher 60 has a rigid handle 70, a grip 72 which may include soft rubber or the like for comfort, a display 74 where a trademark or ornamental feature may be located, a resilient and substantially elastically deformable shaft 76, and a resilient head 78 with a bifurcated accelerator portion 80 shown engaged with the chase toy 62. Also shown is loading portion 90, which is shown opposingly bifurcated and extending distally from the accelerator portion 80.

The launcher, generally at 60, is shown with handle 70, grip 72, display 74, shaft 76, head 78 having accelerator portion 80. The chase toy, generally at 62, is shown with side surfaces 64, inner arcuate surface 66, and outer arcuate surface 68.

With particular reference to FIG. 34 and FIG. 35, the accelerator portion 80 has an interior thrusting surface 84 which serves generally to engage inner arcuate surface 66, outer arcuate surface 68 and side surfaces 64 of the chase toy 62. In its transverse (side-to-side) aspect, the thrusting surface 84 generally approximates the cross-sectional curvature and dimensions of the chase toy 62, although a perfect approximation is not necessary for the operation of this exemplary embodiment. As a result, the chase toy 62 tends to rest in the accelerator portion 80 when the launcher 60 is held with the shaft 76 extending upward. As is also discernible in Fig. 35, the launcher 60 tends to retain the chase toy 62 in all positions because the accelerator portion, as can be seen especially proximate the loading portion 90, provides insufficient clearance let the chase toy 62 escape from the launcher 60.

With reference to FIG. 32, FIG. 34 and FIG. 35, it is seen that in this exemplary embodiment, the shaft 76 is wider (side-to-side) than it is thick (front-to-rear). Being thus relatively wide, the shaft 76 has relatively high lateral stiffness and therefore is relatively resistant to lateral bending, which, in the interest of better aiming, improves lateral control of the launcher 60 as the chase toy 62 is launched. Being thus relatively thin, the shaft 76 has somewhat lower front-to-rear stiffness and therefore elastically deforms under the load that is applied as the launcher 60 is sharply thrust and rotated overhand to accelerate and launch the chase toy 62. In the interest of increased range (or, in the case of a small yard, reduced effort), the elastically deformable shaft 76 absorbs potential energy early during launch and releases it later during launch, imparting increased speed to the chase toy 62. It is also seen that the shaft 76 is tapered, which helps impart a sudden, curved whipping motion to the head 78 in the late stage of the launch and thus helps impart linear and angular velocity and momentum to the chase toy 62.

Very late during launch, as the person launching the chase toy 62 finishes swinging the launcher 60 overhand (a more apt verb would be "flicking," this embodiment being short-shafted), the head 78 decelerates along a downward-curved path before eventually coming to rest. As the head 78 decelerates along the curved path, the chase toy 62, while engaged with the thrusting surface 84 of the accelerator portion 80, begins to overshoot the head 78 and experiences torque imparting angular velocity and angular momentum to the chase toy 62. Thus, the chase toy 62 is not only launched, but set spinning, wheel-like, and is thereby stabilized in edge-wise flight. Additionally, the spin imparted is topspin; therefore, when the chase toy encounters terrain it will do so with angular momentum tending to urge it forward, prolonging its travel downrange.

With reference to FIG. 32, FIG. 34 and FIG. 35, the bifurcated accelerator portion 80 is substantially rigid but elastically deformable and thereby able to retain the chase toy 62 until late in the launch swing at a time when the chase toy 62, driven to ever greater acceleration along a curved path by the launcher 60, exerts a force, roughly aligned with the shaft 76 and in the direction away from the handle 70, sufficient to deform and open the accelerator portion 80, whereupon the chase toy 62 escapes the launcher 60.

With reference to FIG. 40, the accelerator portion 80 is also deformable and openable responsive to a force, applied to the loading portion 90 from without, in the opposite direction, i.e., aligned with the shaft 76 and toward the handle 70. This happens when, as shown in FIG. 40, the dished opposingly bifurcated loading portion 90 is approximated to the side surface 64 of the chase toy 62 and urged onto the chase toy 62. Under these conditions, the inner arcuate surface 66 and other arcuate surface 68 of the chase toy 62 ride past the loading portion 90 and into the accelerator portion 80. To facilitate this operation, the loading portion 90 may be given a smooth surface treatment and may be angled to ease the entry of the chase toy 62.

In this exemplary embodiment of the launcher 60 and chase toy 62 in accordance with the present invention, the chase toy 62 and the accelerator portion 80 cooperate by way of interference fit to enable the launcher 60 to grip the chase toy 62 after the chase toy is approximated to the launcher and until the chase toy 62 is launched. The strength of interference fit may be predetermined to provide sufficient grip under given circumstances. For example, a relatively weak fit holds the chase toy 62 when the chase toy 62 and the launcher 60 are dry. Such a hold might not even be desired, given that the chase toy 62 rests stably in engagement with the launcher 60 when the launcher 60 is held upright. Even though the chase toy is retained adequately for launch within the opposingly bifurcated accelerator portion 80 even when loose, it might be preferred to stabilize the chase toy 62 at a given angle relative to the launcher 60. Accordingly, it might be preferred that the accelerator portion 80 clamp the chase toy 62 and that the contacting surfaces of the chase toy 62 and launcher 60 cooperate to provide enough friction to prevent the chase toy 62 from flopping around. A stronger fit is required in the presence of dog saliva, which tends to be slippery. A still stronger fit is required if it is desired that the chase toy 62 be retained firmly during launch as described in prior co-pending U.S. Patent Application No. 12/069,902, the entire disclosure of which is incorporated herein by reference. Characteristics to be manipulated to influence the strength of grip may be classified according to whether they pertain to the chase toy 62 or the launcher 60 and according to whether they are surface properties or bulk characteristics. The chase toy 62 may be made more or less deformable (by virtue of material, such as by choice of elastomer, or by choice of shape, such as degree of hollowness or porosity) and may be finished with rougher or smoother side surfaces 64. The side surfaces 64 may be spaced farther apart, in consideration of the dimensions of the launcher 60, to strengthen the fit. The accelerator portion 80 may be made more or less deformable though choices in the material and shape of the accelerator portion 80, and rougher or smoother by virtue of material and surface treatment.

Optionally, although not illustrated, the shaft 76 and the handle 70 may be constructed and joined to enable the shaft 76 to telescope partly within the handle 70 or to enable a one segment multi-segmented shaft to telescope within another. Also optionally, the launcher 60 may be equipped with a locking hinge at one or more portions of the handle 70 or shaft 76 to provide for compact storage. Yet another option is to provide the launcher in several short segments that can be separated for compact storage.

The chase toy 62 is molded of an elastomer. However, alternative chase toy fabrications include the full range of materials safe and durable enough and generally suited for amusing a dog and its human companion.

The launcher 60 is preferably a unitary molding of polypropylene, having a single-hand grip 72 perhaps 6 inches in length or a two-hand grip 72 perhaps 10 inches in length (not illustrated in the figures) and a shaft about 13 inches in length, about 0.5 inch thick and about 1 inch wide proximate the handle 70, and tapering somewhat distally (toward the head 78). Alternatively, the shaft 76 and head 78 may be molded separately and sonic-welded together. Other materials, such as composites, metals and hardwood, could be used with appropriate fabrication methods. The grip 72 may be formed on or adhered to to the handle 70 in ways customary for toys, tools and sporting goods, or it may be omitted.

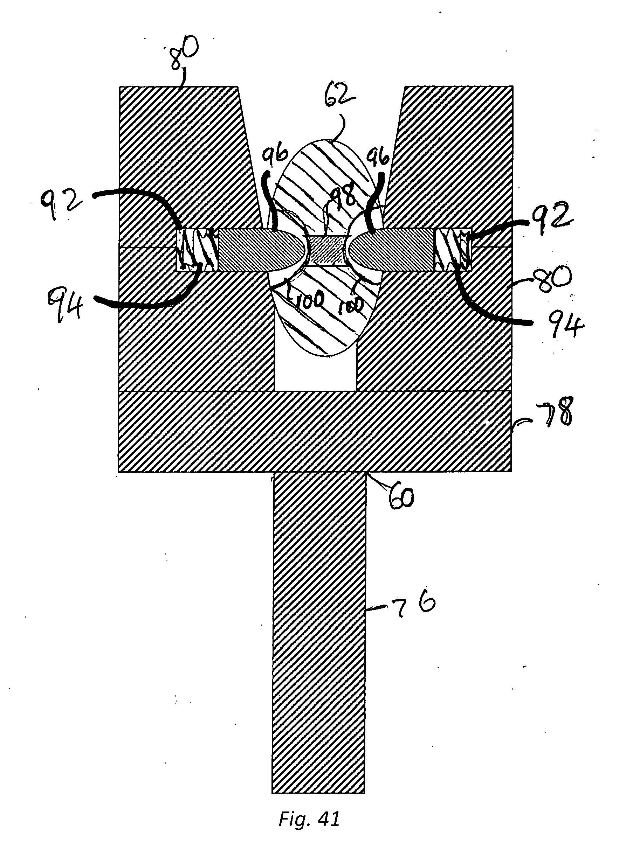

With reference to FIG. 41, a partial side sectional view of a third alternative embodiment of the launcher 60 and compressible chase toy 62 in accordance with the present invention, the rigid shaft 76 and rigid head 78 are shown with the accelerator portion 80 having opposed bores 92 each containing a spring 94 urging a convex-pointed ram 96 into contact with a hardened double-concave-ended shank 98 embedded between pits 100 formed in the side surfaces 64 of the chase toy 62. The rams 96 hold the chase toy 62 in the accelerator portion 80 until near the end of the swing, at which time forces due to acceleration urge the chase toy 62 from the launcher 60. To load the chase toy 62 onto the launcher, the user approximates the accelerator portion 80 to the chase toy 62 edgewise and forces the accelerator portion 80 onto the chase toy 62.

As can be seen from the drawing figures and from the description, each embodiment of the launcher and chase toy in accordance with the present invention solves a problem by addressing the need for greater travel downrange at reduced effort and for a toy which stimulates a dog.

While the specification describes particular embodiments of the present invention, those of ordinary skill can devise variations of the present invention without departing from the inventive concept.

Although specific embodiments have been illustrated and described herein, those of ordinary skill in the art will appreciate that any arrangement calculated to achieve same purposes can be substituted for the specific embodiments shown. This disclosure is intended to cover any and all adaptations or variations of various embodiments of the invention. It is to be understood that the above description has been made in an illustrative fashion, and not a restrictive one. Combinations of the above embodiments, and other embodiments not specifically described herein will be apparent to those of skill in the art upon reviewing the above description. The scope of various embodiments of the invention includes any other applications in which the above structures and methods are used. Therefore, the scope of various embodiments of the invention should be determined with reference to the appended claims, along with the full range of equivalents to which such claims are entitled.

In the foregoing description, if various features are grouped together in a single embodiment for the purpose of streamlining the disclosure, this method of disclosure is not to be interpreted as reflecting an intention that the claimed embodiments of the invention require more features than are expressly recited in each claim. Rather, as the following claims reflect, inventive subject matter lies in less than all features of a single disclosed embodiment. Thus the following claims, and such other claims as may later be added, are hereby incorporated into the description of the embodiments of the invention, with each claim standing on its own as a separate preferred embodiment.

## Claims

1. A launcher and chase toy, comprising:
a toroidal chase toy having an inner arcuate surface defining an arc;
a shaft having a grippable first end and a second end;
a head fixed on said second end,
said head having a toy-engaging surface which faces forward when said shaft is held with head upward;
said toy-engaging surface conforming to said inner arcuate surface of said toroidal toy when said inner arcuate surface faces rearward relative to said toy-engaging surface and said arc defined by said inner arcuate surface is contained in a plane-of-swing substantially parallel to said shaft.

2. The launcher and chase toy as set forth in claim 1, wherein:
said inner arcuate surface defines a cross-sectional profile curve intersecting orthogonally with said arc on said toroidal toy; and
said toy-engaging surface of said head conforms to said cross-sectional profile curve defined on said toroidal toy when said arc defined by said inner arcuate surface is contained in a plane-of-swing substantially parallel to said shaft.

3. The launcher and chase toy as set forth in claims 1-2, wherein:
said shaft possesses greater stiffness in a direction perpendicular to said plane-of-swing than in the direction parallel thereto; and/or
said launcher is configured to deflect said toroidal toy sufficiently to prevent recapture thereof should said toroidal toy impinge on said launcher after departure from said launcher.

4. The launcher and chase toy as set forth in claims 1-3, wherein said head comprises a rear surface angled relative to said plane-of-swing.

5. The launcher and chase toy as set forth in claims 1-4, wherein said head comprises a rearward-extending deflector configured to deflect said toroidal toy sufficiently to prevent recapture thereof should said toroidal toy impinge on said launcher after departure from said launcher.

6. The launcher and chase toy as set forth in claims 1-5, wherein said toroidal toy and said forward-facing surface are shaped and dimensioned for mutual interference-fit and said toroidal toy is thereby sufficiently fixed in engagement with said forward-facing surface to keep said toroidal toy and said launcher together when said shaft is held with head oriented other than upward, and wherein, optionally:
at least one of said toroidal toy and said forward-facing surface is deformable into said mutual interference-fit.

7. A launcher and chase toy, comprising:
a toroidal chase toy having an inner arcuate surface defining an arc;
a shaft having a grippable first end and a second end;
a head fixed on said second end,
said head having a toy-engaging surface configured and oriented to engage a segment of said toroidal toy when said shaft is held with head upward;
said toy-engaging surface partly encircling said segment of said toroidal toy when said inner arcuate surface faces rearward and said arc defined by said inner arcuate surface is contained in a plane-of-swing substantially parallel to said shaft.

8. The launcher and chase toy as set forth in claim 7, wherein said toroidal toy and said toy-engaging surface are shaped and dimensioned for mutual interference-fit and said toroidal toy is sufficiently fixed in engagement with said forward-facing surface to keep said toroidal toy and said launcher together when said shaft is held with head oriented other than upward, and wherein, optionally:
at least one of said toroidal toy and said forward-facing surface is deformable into said mutual interference-fit.

9. The launcher and chase toy as set forth in claims 7 or 8 wherein said shaft possesses greater stiffness in the direction perpendicular to said plane-of-swing than in the direction parallel thereto.

10. The launcher and chase toy as set forth in claim 7-9 wherein said head comprises a loading portion configured to guide said toroidal toy into engagement with said toy-engaging surface when said launcher is urged into contact with said toroidal toy.

11. The launcher and chase toy as set forth in claims 8-10 wherein said head comprises a loading portion configured to guide said toroidal toy into said mutual interference-fit with said toy-engaging surface when said toy-engaging surface is urged into contact with said toroidal toy.

12. The launcher and chase toy as set forth in claims 7-11 wherein said toy-engaging surface is opposingly bifurcated.

13. The launcher and chase toy as set forth in claims 10-12 wherein said loading portion is opposingly bifurcated and dished and extends from said head proximate said toy-engaging surface.

14. The launcher and chase toy as set forth in claims 1-13, wherein:
said shaft has at least one curved portion between said grippable first end and said second end and said shaft is out-of-plane with said arc when said toy-engaging surface conforms to said inner arcurate surface; and/or
said shaft tapers distally.

15. A launcher and chase toy, comprising:
a toroidal toy having opposing side surfaces and an inner arcuate surface;
an arc defined by said inner arcuate surface;
a pair of opposed pits, one formed in each of said opposing side surfaces;
a shank embedded in said toroidal toy between said opposed pits;
a shaft having a grippable first end and a second end;
a head fixed on said second end,
said head having a toy-engaging surface configured and oriented to engage a segment of said toroidal toy when said shaft is held with head upward;
said toy-engaging surface partly encircling said segment of said toroidal toy when said inner arcuate surface faces rearward and said arc defined by said inner arcuate surface is contained in a plane-of-swing substantially parallel to said shaft;
said toy-engaging surface being bifurcated and containing a pair of opposing rams, said opposing rams being biased toward one another and being configured to engage said shank via respective ones of said opposed pits when said toy-engaging surface partly encircles said segment of said toroidal toy,
said rams holding said toroidal toy in engagement with said launcher against a force of predetermined magnitude,
said toroidal toy escaping said rams and said launcher when said magnitude is exceeded.
